# FASCICULE DE BREVET EUROPEEN

(11) **EP 1 802 842 B1**
(45) Date de publication et mention de la délivrance du brevet: **07.04.2010**
(21) Numéro de dépôt: 05794400.1
(22) Date de dépôt: 17.10.2005
(51) Int. Cl.: E06B 9/72

(54) **DISPOSITIF AVEC UN TAMBOUR DANS LEQUEL EST MONTE UN MOTEUR D'ENTRAINEMENT**
VORRICHTUNG MIT EINER TROMMEL MIT EINEM DARIN ANGEBRACHTEN ANTRIEBSMOTOR
DEVICE WITH A DRUM WITH A DRIVE MOTOR MOUNTED THEREIN

(30) Priorité: 15.10.2004 BE 200400509
(43) Date de publication de la demande: 04.07.2007
(73) Titulaire: DYNACO INTERNATIONAL S.A., 9310 Moorsel (BE)
(72) Inventeur: COENRAETS, Benoit, Benoit COENRAETS, B-1050 Bruxelles (BE)
(74) Mandataire: Callewaert, Koen
(86) Numéro de dépôt international: PCT/IB2005/053404
(87) Numéro de publication internationale: WO 2006/040747

(56) Documents cités:
- WO-A-01/55548
- DE-B- 1 134 189
- FR-A- 790 394
- FR-A- 2 604 203
- FR-A- 2 716 922
- US-A- 3 285 089
- PATENT ABSTRACTS OF JAPAN vol. 1995, no. 08, 29 septembre 1995 (1995-09-29) & JP 07 139271 A (MISAWA HOMES CO LTD; others: 01), 30 mai 1995 (1995-05-30)
- PATENT ABSTRACTS OF JAPAN vol. 2003, no. 12, 5 décembre 2003 (2003-12-05) & JP 2004 251036 A (SHINANO KENSHI CO LTD), 9 septembre 2004 (2004-09-09)

## Description

La présente invention est relative à un dispositif comprenant un tambour coopérant avec un moteur d'entraînement monté au moins partiellement à l'intérieur du tambour.

Un problème important qui existe dans les dispositifs connus de ce genre est que, par le fait que le moteur est enfermé en grande partie dans le tambour, celui-ci risque de se chauffer à des températures relativement élevées, de l'ordre de 110° C, lorsque la température ambiante est de l'ordre de 22°C et lorsqu'il doit fonctionner très fréquemment à grande vitesse. Ceci limite, par conséquent, l'utilisation d'un tel dispositif lorsqu'il est destiné à l'entraînement d'un volet pour la fermeture d'une baie ou autre ouverture.

De tels dispositifs ne conviennent, par exemple, pas pour l'entraînement d'une porte mobile verticalement à une vitesse de l'ordre de 3 à 5 m/s et avec une fréquence d'ouverture et de fermeture de l'ordre de 400 fois par heure. Ceci peut être le cas dans des lieux très fréquentés.

Ainsi, il y a généralement lieu de prévoir des moyens de contrôle permettant de mettre le moteur temporairement hors service pour éviter d'endommager certaines parties sensibles à la chaleur situées à l'intérieur du tambour à proximité du moteur, tels que des circuits électroniques.

Il a, en effet, été constaté que le refroidissement classique du moteur par de l'air qui est envoyé à l'intérieur de ce dernier entre le rotor et le stator ne permet pas de le refroidir suffisamment.

Le document DE 1 134 189 décrit un tambour avec un moteur qui est refroidi par un courant forcé d'air, tandis que le document US 3 285 089 décrit un moteur électrique monté dans un tambour sans refroidissement.

Un des buts essentiels de la présente invention est de proposer une solution très efficace à ce problème et ceci d'une manière techniquement et économiquement justifiée.

A cet effet, suivant l'invention, le dispositif comprend des moyens permettant de créer un courant forcé d'air de refroidissement dans un espace prévu entre la paroi extérieure du moteur et la paroi intérieure du tambour selon la revendication 1.

Avantageusement, des moyens sont prévus pour renouveler d'une manière sensiblement continue l'air de refroidissement dans l'espace précité au moins lors du fonctionnement du moteur.

Plus particulièrement, le dispositif suivant l'invention comprend, au moins d'un côté du moteur, des moyens permettant de conduire le courant d'air le long de la paroi latérale extérieure du moteur.

Suivant une forme de réalisation particulièrement avantageuse, le moteur est monté sur un châssis situé en-dehors du tambour et présentant, en regard du moteur, une ouverture par laquelle de l'air peut être introduit dans le tambour pour former le courant d'air précité.

Suivant une forme de réalisation préférentielle de l'invention, le tambour présente à l'intérieur un passage pour le courant d'air permettant d'évacuer l'air hors du tambour après son déplacement le long de la paroi extérieure du moteur.

D'autres détails et particularités de l'invention ressortiront de la description donnée ci-après, à titre d'exemple non limitatif, avec référence aux dessins annexés, de quelques formes de réalisation particulières du dispositif suivant l'invention.

La figure 1 est une vue en perspective schématique d'une première forme de réalisation.

La figure 2 est, à plus petite échelle, une représentation schématique d'une section longitudinale axiale d'une variante de cette même première forme de réalisation.

La figure 3 est une représentation schématique d'une section analogue à celle de la figure 2 d'une deuxième forme de réalisation.

Les figures 4 et 5 sont respectivement une section analogue à celle de la figure 3 d'une troisième et d'une quatrième forme de réalisation. La réalisation selon la figure 4 ne fait pas partie de l'invention.

La figure 6 représente schématiquement une vue en élévation d'une application préférentielle du dispositif suivant l'invention.

Dans les différentes figures, les mêmes chiffres de référence se rapportent aux mêmes éléments ou à des éléments analogues.

L'invention concerne, d'une façon générale, un dispositif comprenant (a) un tambour entraîné par un moteur monté au moins partiellement dans le tambour, d'une manière sensiblement coaxiale avec ce dernier, et (b) des moyens permettant un refroidissement très efficace de ce moteur et éventuellement des accessoires également contenus dans le tambour.

Il a été constaté que, d'une façon entièrement imprévisible, il s'agit de moyens permettant de créer un courant forcé d'air de refroidissement le long de la paroi extérieure du moteur, par exemple, par un ventilateur monté sur l'arbre d'entraînement du moteur.

Il peut s'agir d'un dispositif qui est utilisé pour la fermeture d'une baie ou autre ouverture. Dans ce cas particulier, le tambour est destiné à déplacer un volet, formé par exemple d'un rideau, qui peut éventuellement être déroulé du tambour pour fermer la baie ou l'autre ouverture et enroulé sur ce dernier pour ouvrir la baie ou l'autre ouverture. Ceci nécessite que le volet soit flexible au moins dans le sens de l'enroulement.

Dans d'autres cas, le volet peut simplement être dévié ou non au-dessus de la baie ou autre ouverture.

Par l'expression 'courant forcé', il y a lieu de comprendre, dans le cadre de la présente invention, un courant d'air qui, à l'opposé d'un courant naturel d'air, est obtenu par la mise en oeuvre de moyens mécaniques tels qu'un ventilateur formé par une hélice ou une turbine montée sur l'arbre de transmission du moteur, des aubes fixées contre la paroi intérieure du tambour, une soufflerie ou un aspirateur monté éventuellement en dehors du tambour, etc. Ainsi, on peut utiliser un moteur classique avec un ventilateur monté dans une enveloppe d'un côté de ce dernier.

Ce refroidissement permet, d'une façon surprenante, de maintenir la température du moteur constamment aux environs de 60° C lorsque la température ambiante est de l'ordre de 22°C.

Egalement suivant l'invention, on prévoit des moyens pour renouveler d'une manière sensiblement continue l'air de refroidissement autour du moteur au moins lors du fonctionnement de ce dernier.

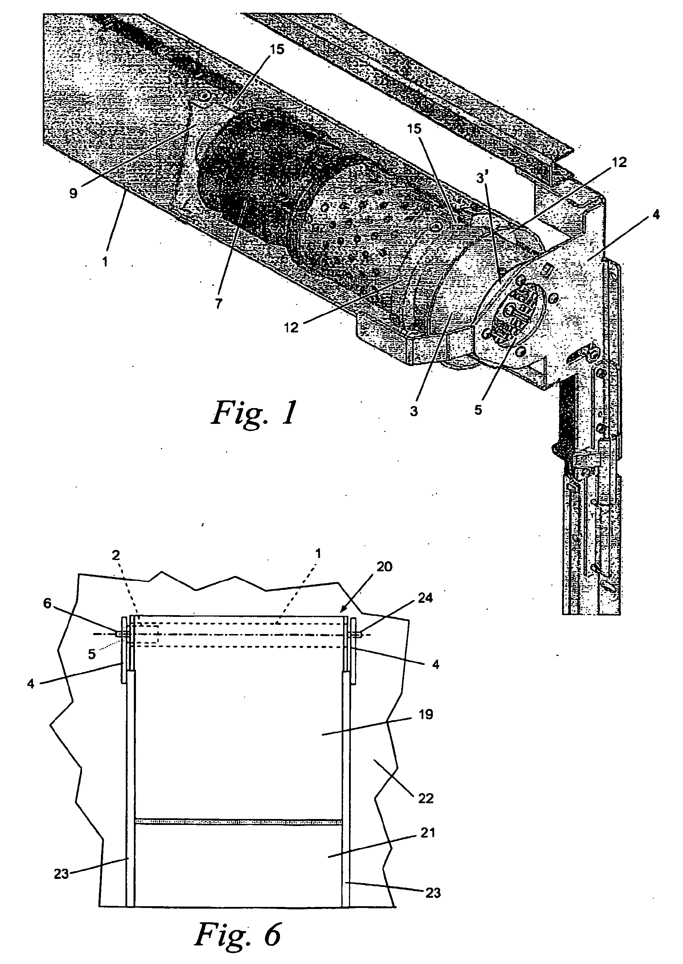

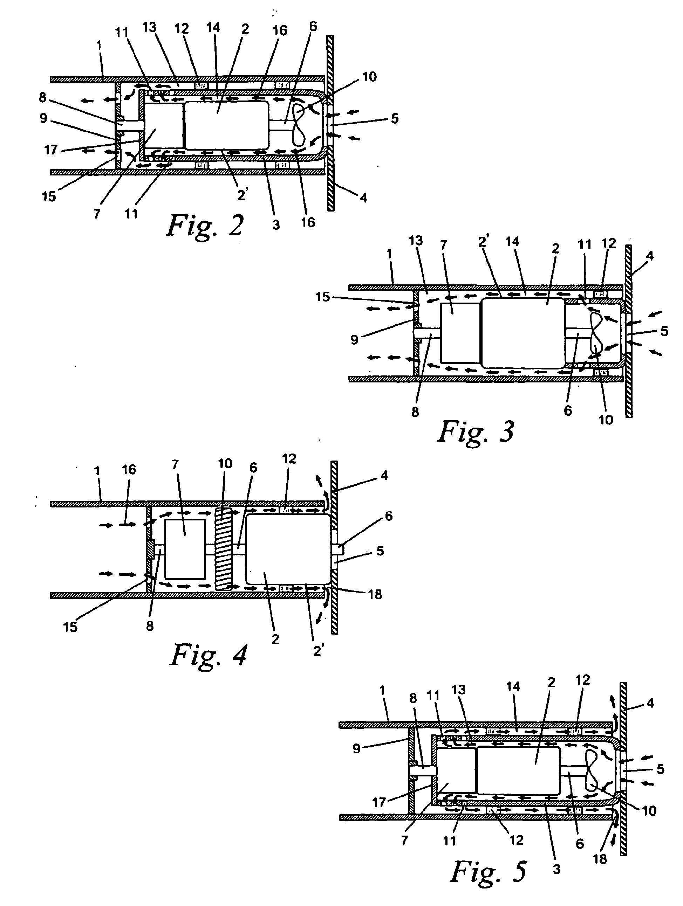

La figure 1, qui concerne une première forme de réalisation montre un dispositif d'entraînement d'un tambour 1 autour de son axe par un moteur 2 monté entièrement à l'intérieur de ce dernier, alors que la figure 2 montre une variante de cette première forme de réalisation.

Pour la clarté de la figure 1, le tambour 1 a été représenté en transparence, de manière à permettre de distinguer le contenu du tambour.

Le moteur 2 est fixé à l'intérieur d'un cylindre de guidage 3, qui est monté avec une de ses extrémités sur un châssis 4 situé en-dehors du tambour 1. Dans une variante montrée à la figure 2, le cylindre 3 est prolongé autour des moyens d'entraînement 7 et est fermé par un disque 17, alors que dans la figure 1 le cylindre ne dépasse pas le moteur 2.

Le châssis 4 présente, en regard du moteur 2, une ouverture circulaire 5 qui est coaxiale avec l'arbre 6 du moteur 2, dont une de ses extrémités pénètre dans cette ouverture 5. L'autre extrémité de cet arbre 6 est connectée à des moyens de transmission 7 comprenant un réducteur, connu en soi, avec un arbre d'entraînement 8.

L'arbre 8, coaxial avec l'arbre 6, est connecté à un élément 9 fixé contre la paroi intérieure du tambour 1, de manière à permettre d'entraîner ce dernier en rotation autour de son axe lors du fonctionnement du moteur 2.

Dans cette forme de réalisation particulière, et sa variante, les moyens pour créer le courant forcé d'air sont formés par une hélice 10 montée sur l'arbre 6 du moteur 2, à l'intérieur du cylindre de guidage 3 et du côté du châssis 4, en regard de l'ouverture 5.

Le cylindre 3 présente une série d'ouvertures 11 qui sont également réparties dans la partie de ce dernier du côté du moteur 2 opposé à celui où se situe l'hélice 10.

Une caractéristique importante de cette forme de réalisation est que le cylindre 3 est maintenu d'une manière sensiblement coaxiale avec le tambour 1 par des patins 12 en forme d'arc de cercle qui sont fixés contre la paroi intérieur du tambour 1, de manière à maintenir ainsi un espace libre 13 entre la paroi extérieure 2' du moteur 2 et la paroi intérieure du tambour 1.

Lors de la rotation du tambour 1, le cylindre 3 glisse contre ces patins 12, qui sont réalisées en une matière présentant un coefficient de frottement relativement bas et une bonne tenue à des températures relativement élevées.

Les patins 12 et l'élément 9 présentent des passages 15 pour le courant d'air de refroidissement permettant au courant d'air d'être évacué par l'extrémité du tambour 1 opposée à celle dans laquelle est monté le moteur 2.

L'élément 9 est de préférence réalisé en une tôle quelque peu déformable d'une manière élastique pour permettre un mouvement transversal de l'arbre 6 du moteur 2 provoqué lors de son fonctionnement. Ainsi, il n'est pas nécessaire d'aligner parfaitement l'axe du tambour 1 et l'arbre 6 du moteur 2. De plus, le cylindre 3 peut être monté avec un certain jeu entre les patins 12, par exemple de l'ordre de 4 mm, sans que ceci puisse provoquer des vibrations du moteur 2 lors de son fonctionnement.

Au moment de la mise en marche du moteur 2, l'hélice 10 aspire de l'air extérieur à travers l'ouverture 5 dans le châssis 4 en créant ainsi un courant d'air forcé à l'entrée du cylindre de guidage 3. Ce courant est dévié vers la paroi extérieur 2' du moteur 2 dans l'espace 14 entre cette dernière et le cylindre 3, comme montré par les flèches 16, pour passer ensuite par les ouvertures 11 dans l'espace 13 et être évacué en-dehors du tambour 1 par les ouvertures 15 de l'élément 9. Il est important de noter que la face des patins 12 en contact avec le cylindre 3 est refroidie d'une manière très efficace grâce au passage du courant d'air le long de la face intérieure de ce dernier.

La deuxième forme de réalisation, telle qu'illustrée très schématiquement par la figure 3 se distingue essentiellement par rapport à la première forme de réalisation et sa variante par le fait que le cylindre de guidage 3 est monté contre le côté du moteur 2 orienté vers le châssis 4 et que le courant d'air est dévié à travers de ce cylindre 3 par des ouvertures 11 jusque dans l'espace 13. Cet espace 13 s'étend le long de la paroi extérieure 2' du moteur 2.

En fait, ce cylindre 3 peut être formé par une enveloppe classique connue du ventilateur 10, dans laquelle sont prévues les ouvertures 11. Contrairement à ce qui est le cas dans la forme de réalisation particulière montrée dans la figure 3, l'extrémité de cette enveloppe orientée vers le châssis 4 peut comprendre un déflecteur qui s'étend autour du ventilateur 10 et qui a une allure quelque peu tronconique favorisant ainsi la déviation du courant d'air vers les ouvertures 11. Au lieu d'ouvertures séparées 11, il est possible de prévoir une ouverture annulaire obtenue en fixant ladite enveloppe à une certaine distance du moteur 2.

La forme de réalisation représentée à la figure 4 diffère par rapport à celle illustrée par la figure 3 par le fait que le ventilateur 10 est formée par une turbine montée sur l'arbre 6 entre le moteur 2 et les moyens de transmission 7.

De plus, le courant d'air de refroidissement est aspiré à travers les ouvertures 15 de l'élément 9 et est évacué, après son passage le long de la paroi extérieure 2' du moteur 2, à travers l'espace annulaire 18 entre le tambour 1 et le châssis 4.

La figure 5 concerne une forme de réalisation qui se distingue essentiellement par rapport aux précédentes formes de réalisation par le fait que le sens du courant d'air, ayant passé le long de la surface extérieure 2' du moteur 2, est inversé, après avoir traversé les ouvertures 11 dans le cylindre 3, dans l'espace 14 entre ce dernier et la paroi intérieure du tambour 1. Ceci est le résultat du fait que l'élément 9 obture complètement le tambour 1 et ne présente donc pas de passages pour le courant d'air.

Dans cette dernière forme de réalisation, le cylindre de guidage 3 est identique à celui de la variante de la première forme de réalisation, de même que le montage du moteur 2 et des moyens de transmission 7 dans ce cylindre 3.

Par le fait que, dans ces différentes formes de réalisation, l'extrémité de l'arbre 6, du côté du châssis 4, est facilement accessible par l'ouverture 5 prévue dans ce dernier, il est possible d'utiliser une manivelle, non représentée, pour, en cas de panne du moteur 2, mettre ce dernier manuellement en mouvement, par exemple, pour déplacer un volet, monté sur le tambour 1, entre sa position de fermeture et sa position d'ouverture.

Une préférence est, toutefois, donnée à un déplacement du courant d'air dans le même sens entre les deux extrémités du tambour 1 étant donné que dans un tel cas la résistance au déplacement sera sensiblement inférieure que dans le cas d'une inversion du courant d'air comme dans la quatrième forme de réalisation. De plus, lors d'un déplacement unidirectionnel, on obtiendra un effet de cheminée assez prononcé.

La figure 6 montre une porte 19 pouvant s'enrouler autour d'un tambour 1 du dispositif d'entraînement, suivant l'invention, illustré notamment par les figures 1 à 5.

Dans cette application particulière, le dispositif, désigné par la référencé 20, est monté au-dessus d'une baie 21 prévue dans une paroi 22. La porte 19 est, par exemple, constituée d'une toile plastifiée et est fixée par son bord supérieur au tambour 1.

Par la rotation dans un sens déterminé du tambour 1 entraîné par le moteur monté à l'intérieur de ce dernier, la porte 19 peut être relevée jusqu'à l'ouverture de la baie 21. La figure 6 montre la porte 19 dans une position intermédiaire.

Les bords latéraux de la porte 19 sont guidés dans des glissières 23 prévues dans un encadrement délimitant la baie 21 latéralement.

Sur la partie supérieure de cet encadrement est fixée, de part et d'autre de la baie 21, un châssis 4, situé à l'extérieur du tambour 1, et portant le dispositif 20.

Dans le présent cas, le tambour 1 repose avec une de ses extrémités sur le moteur 2, qui est monté par l'intermédiaire du cylindre de guidage 3 sur un des châssis 4, l'autre extrémité du tambour 1 étant montée à rotation, d'une manière connue en soi, sur le châssis 4 prévu de l'autre côté du tambour 1 par l'intermédiaire d'un arbre 24 s'étendant suivant l'axe du tambour 1.

Il est important de noter que dans une telle application, le moteur d'entraînement est fortement sollicité, généralement plus que dans d'autres applications, étant donné qu'il doit effectuer aussi bien une force de poussé qu'une force de traction sur la porte à actionner et qu'il doit vaincre la résistance provoquée par le frottement des bords latéraux de la porte dans des glissières.

Il est bien entendu que la portée de la présente invention n'est pas limitée aux différentes formes de réalisation décrites ci-dessus, mais que bien d'autres variantes peuvent être envisagées sans sortir du cadre de cette invention.

C'est ainsi qu'il est possible d'utiliser un moteur à deux sens de rotation. Lors de l'inversion du sens de rotation, le sens de déplacement du courant d'air de refroidissement le long de la paroi extérieure du moteur sera donc également inversé.

Au lieu de prévoir des patins entre le cylindre de guidage et la paroi intérieure du tambour, on peut utiliser des galets qui sont montés soit sur le cylindre soit sur la paroi intérieure du tambour. De plus, ces patins pourraient être constitués par des anneaux dans lesquels sont prévus des canaux parallèles à l'axe du tambour pour permettre le passage du courant d'air. Il est également possible de monter les patins sur la paroi extérieure du cylindre de guidage.

Le cas échéant, le ventilateur 10 peut être monté sur l'arbre 8 des moyens de transmission 7 à n'importe quelle endroit à l'intérieur du tambour 1.

Enfin, l'utilisation du dispositif d'entraînement en cause n'est pas nécessairement limitée à l'actionnement de portes relevables.

## Revendications

1. Dispositif d'entraînement d'un tambour (1), présentant une forme tubulaire, autour de son axe comprenant un moteur (2) monté au moins partiellement à l'intérieur du tambour (1) et des moyens de transmission (7) entre le moteur (2) et le tambour (1), des moyens (10) étant prévus permettant de créer un courant forcé d'air de refroidissement dans un espace (13,14) prévu entre le moteur (2) et une paroi intérieure du tambour (1), le moteur (2) étant monté d'un côté sur un châssis (4) et de son côté opposé entraînant le tambour (1) en étant fixé au moins partiellement à l'intérieur d'un cylindre de guidage (3) du courant d'air, ce cylindre (3) s'étendant au moins partiellement autour du moteur (2) et permettant de conduire le courant d'air le long de la paroi extérieure (2') de ce dernier, **caractérisé en ce que** le tambour (1) est monté à coulissement par l'intermédiaire de patins (12), et/ou de galets montés entre le cylindre (3) et la paroi intérieure du tambour (1), et aussi monté coaxialement sur le cylindre de guidage (3) tout en étant soutenu par le cylindre (3) d'une manière telle que le tambour (1) puisse subir une rotation, en glissant sur les patins (12) et/ou gallets, autour de son axe par rapport au cylindre (3) et d'une manière telle qu'il permet le passage du courant d'air à travers la paroi du cylindre (3) et/ou de patins (12) soit à partir de l'extrémité du tambour (1) orientée vers le châssis (4), sur lequel le moteur (2) est monté, jusqu'à son évacuation à l'extérieur du tambour (1) par la même extrémité ou l'extrémité opposée du tambour (1), soit dans une direction inverse.

2. Dispositif suivant la revendication 1, **caractérisé en ce que** les patins (12) présentent des passages (15) pour le courant d'air de refroidissement permettant au courant d'air d'être évacué par l'extrémité du tambour (1) opposée à celle dans laquelle est monté le moteur (2)

3. Dispositif suivant la revendication 1 ou 2, **caractérisé en ce qu'**il comprend au moins à une des extrémités du moteur (2) des moyens permettant de conduire le courant d'air le long de la paroi extérieure (2') du moteur (2).

4. Dispositif suivant l'une quelconque des revendications 1 à 3, **caractérisé en ce qu'**il comprend des moyens pour renouveler d'une manière continue l'air de refroidissement dans l'espace précité (13,14) au moins lors du fonctionnement du moteur (2).

5. Dispositif suivant l'une quelconque des revendications 1 à 4, **caractérisé en ce que** les moyens précités (10) pour créer le courant d'air comprennent au moins une hélice montée sur un arbre (6) entraîné par le moteur (2).

6. Dispositif suivant la revendication 5, **caractérisé en ce que** l'hélice précitée (10) est située à l'intérieur du cylindre de guidage (3), entre le moteur (2) et le châssis (4).

7. Dispositif suivant l'une quelconque des revendications 1 à 6, **caractérisé en ce que** le cylindre de guidage (3) présente des ouvertures (11) réparties dans sa partie située du côté du moteur (2) opposé à celui où se situent les moyens (10) pour créer le courant forcé d'air, d'une manière telle à permettre à ce courant d'air d'être évacué à travers ces ouvertures (11) après son passage le long de la paroi extérieure (2') du moteur (2).

8. Dispositif suivant l'une quelconque des revendications 1 à 7, **caractérisé en ce que** le châssis (4) sur lequel est monté le moteur (2) est situé en-dehors du tambour (1) et présente, en regard du moteur (2), une ouverture (5) par laquelle de l'air peut être introduit pour former le courant d'air précité.

9. Dispositif suivant l'une quelconque des revendications 1 à 8, **caractérisé en ce que** le cylindre de guidage (3) porte le moteur (2) et est monté par son extrémité orientée vers l'extérieur du tambour (1) sur le châssis précité (4).

10. Dispositif suivant l'une quelconque des revendications 1 à 9, **caractérisé en ce que** le tambour (1) présente, sur au moins une partie de sa longueur, un passage pour le courant d'air permettant d'évacuer l'air à l'extérieur du tambour (1) après son déplacement le long de la paroi extérieure (2') du moteur (2).

11. Dispositif suivant l'une quelconque des revendications 1 à 10, **caractérisé en ce que** le tambour (1) est agencé de manière à permettre le passage du courant d'air à partir de l'extrémité du tambour (1) orientée vers le châssis (4), sur lequel le moteur (2) est monté jusqu'à son extrémité opposée ou inversement.

12. Dispositif suivant l'une quelconque des revendications 1 à 11, **caractérisé en ce que** le moteur (2) entraîne un élément (9) fixé à l'intérieur du tambour (1), d'une manière telle à permettre de mettre le tambour (1) en rotation autour de son axe.

13. Dispositif suivant la revendication 12, **caractérisé en ce que**, le tambour (1) présentant une forme tubulaire, l'élément précité (9) est tel à ce qu'il permet le passage du courant d'air à partir de l'extrémité du tambour (1) orientée vers le châssis (4), sur lequel le moteur (2) est monté, jusqu'à l'extérieur du tambour (1), notamment jusqu'à son extrémité opposée ou inversement.

14. Dispositif suivant la revendication 12 ou 13, **caractérisé en ce que** l'élément (9) est au moins partiellement déformable d'une manière élastique pour permettre un mouvement transversal limité du moteur (2) par rapport à l'axe de rotation du tambour (1).

15. Installation pour la fermeture d'une baie ou autre ouverture comprenant une porte pouvant s'enrouler autour d'un tambour (1) lors de l'ouverture de la porte et pouvant se dérouler de ce tambour (1) lors de sa fermeture, **caractérisée en ce qu'**elle comprend le dispositif suivant l'une quelconque des revendications 1 à 14.

## Claims

1. Device for driving a drum (1), having a tubular shape, about the axis thereof, comprising a motor (2) which is mounted at least partially inside the drum (1) and transmission means (7) disposed between the motor (2) and the drum (1), whereby means (10) are provided enabling a forced current of cooling air to be created in a space (13,14) between the motor (2) and an inner wall of the drum (1), whereby the motor (2) is mounted on one side on a frame (4) and is driving the drum (1) on its opposite side being fixed at least partially inside a guide roller (3) of the air current, whereby this roller (3) extends at least partially about the motor (2) and makes it possible to guide the air current along the exterior wall (2') of the latter, **characterised in that** the drum (1) is mounted in a sliding manner by means of guide blocks (12) and/or wheels mounted between the roller (3) and the inner wall of the drum (1) and also mounted co-axially on the guide roller (3) while being supported by the roller (3) in such a way that the drum (1) can undergo a rotation, by sliding on the guide blocks (12) and/or wheels, about its axis in relation to the roller (3) and in such a way that it allows the air current to pass through the wall of the roller (3) and/or the guide blocks (12) either from the far end of the drum (1) directed towards the frame (4), on which the motor (2) is mounted, to its evacuation at the outside of the drum (1) through the same far end or the opposite far end of the drum (1) or in an inverse direction.

2. Device according to claim 1, **characterised in that** the guide blocks (12) have passages (15) for the cooling air current, such that the air current can be evacuated via the far end of the drum (1) opposite the one where the motor (2) is mounted.

3. Device according to claim 1 or 2, **characterised in that** it comprises means (3), at least on one of the far ends of the motor (2), which make it possible to guide the air current along the exterior wall (2') of the motor (2).

4. Device according to any one of claims 1 to 3, **characterised in that** it comprises means to continuously refresh the cooling air in the aforesaid space (13,14), at least while the motor (2) is operational.

5. Device according to any one of claims 1 to 4, **characterised in that** the above-mentioned means (10) to create the air current comprise at least one helical wheel mounted on a shaft (6) driven by the motor (2).

6. Device according to claim 5, **characterised in that** the aforesaid helical wheel (10) is situated inside the guide roller (3), between the motor (2) and the frame (4).

7. Device according to any one of claims 1 to 6, **characterised in that** the guide roller (3) has openings (11) distributed in the part situated on the side of the motor (2) opposite the one where the means (10) for creating the forced air current are situated, in such a way that this air current can be evacuated through said openings (11) after having passed along the exterior wall (2') of the motor (2).

8. Device according to any one of claims 1 to 8, **characterised in that** the frame (4) on which the motor (2) is mounted is situated outside the drum (1) and has an opening (5), opposite the motor (2), through which air can be introduced so as to create the above-mentioned air current.

9. Device according to any one of claims 1 to 8, **characterised in that** the guide roller (3) carries the motor (2) and is mounted with its far end directed towards the outside of the drum (1) on the above-mentioned frame (4).

10. Device according to any one of claims 1 to 9, **characterised in that** the drum (1) has a passage for the air current, at least over a part of its length, which makes it possible to evacuate the air outside the drum (1) after it has been displaced along the exterior wall (2') of the motor (2).

11. Device according to any one of claims 1 to 10, **characterised in that** the drum (1), is arranged such that it allows the air current to pass from the far end of the drum (1) directed towards the frame (4), on which the motor (2) is mounted to its opposite far end or inversely.

12. Device according to any one of claims 1 to 11, **characterised in that** the motor (2) drives an element (9) fixed inside the drum (1), in such a way that the drum (1) can start to rotate about its axis.

13. Device according to claim 12, **characterised in that**, as the drum (1) has a tubular shape, the above-mentioned element (9) is such that it allows the air current to pass from the far end of the drum (1) directed towards the frame (4), on which the motor (2) is mounted, to the outside of the drum (1), namely its opposite far end or inversely.

14. Device according to claim 12 or 13, **characterised in that** the element (9) can be at least partly deformed in an elastic manner so as to allow for a limited transversal movement of the motor (2) in relation to the axis of rotation of the drum (1).

15. Installation for closing a bay or another opening comprising a gate which can roll itself up about a drum (1) when the gate is opened and which can unroll from this drum (1) when it is closed, **characterised in that** it comprises the device according to any one of claims 1 to 14.

## Patentansprüche

1. Vorrichtung zum Antrieb einer Trommel (1) mit rohrförmiger Form um ihre Achse, umfassend einen Motor (2), der mindestens teilweise im Inneren der Trommel (1) montiert ist, und Übertragungsmittel (7) zwischen dem Motor (2) und der Trommel (1), wobei Mittel (10) vorgesehen sind, die es ermöglichen, einen Gebläseluftstrom zur Kühlung in einem Raum (13, 14) zu schaffen, der zwischen dem Motor (2) und einer Innenwand der Trommel (1) vorgesehen ist, wobei der Motor (2) an einer Seite an einem Rahmen (4) montiert ist und an seiner entgegengesetzten Seite die Trommel (1) antreibt, wobei er mindestens teilweise im Inneren eines Führungszylinders (3) des Luftstroms befestigt ist, wobei sich dieser Zylinder (3) mindestens teilweise um den Motor (2) herum erstreckt und es ermöglicht, den Luftstrom entlang der Außenwand (2') des Letztgenannten zu führen, **dadurch gekennzeichnet, dass** die Trommel (1) mittels Kufen (12) und/oder Rollen schiebbar montiert ist, die zwischen dem Zylinder (3) und der Innenwand der Trommel (1) montiert sind, und dass sie auch koaxial am Führungszylinder (3) montiert ist, wobei sie durch den Zylinder (3) derart gehalten wird, dass sich die Trommel (1), indem sie auf den Kufen (12) und/oder Rollen gleitet, in Bezug auf den Zylinder (3) um ihre Achse drehen kann, und dass sie den Durchgang des Luftstroms durch die Wand des Zylinders (3) und/oder die Kufen (12) ermöglicht, und zwar entweder ausgehend vom Ende der Trommel (1), das zum Rahmen (4) hin gerichtet ist, an dem der Motor (2) befestigt ist, bis zu seinem Ausstoß in den Bereich außerhalb der Trommel (1) durch das gleiche Ende oder das entgegengesetzte Ende der Trommel (1), oder in einer umgekehrten Richtung.

2. Vorrichtung nach Anspruch 1, **dadurch gekennzeichnet, dass** die Kufen (12) Durchlässe (15) für den Kühlluftstrom aufweisen, die ermöglichen, dass der Luftstrom durch das Ende der Trommel (1) ausgestoßen wird, das demjenigen entgegengesetzt ist, in dem der Motor (2) montiert ist.

3. Vorrichtung nach Anspruch 1 oder 2, **dadurch gekennzeichnet, dass** sie mindestens an einem der Enden des Motors (2) Mittel umfasst, die es ermöglichen, den Luftstrom entlang der Außenwand (2') des Motors (2) zu führen.

4. Vorrichtung nach einem der Ansprüche 1 bis 3, **dadurch gekennzeichnet, dass** sie Mittel umfasst, um die Kühlluft in dem oben genannten Raum (13, 14) mindestens während des Betriebs des Motors (2) kontinuierlich zu erneuern.

5. Vorrichtung nach einem der Ansprüche 1 bis 4, **dadurch gekennzeichnet, dass** die oben genannten Mittel (10) zur Erzeugung des Luftstroms mindestens eine Schraube umfassen, die an einer Welle (6) montiert ist, die durch den Motor (2) angetrieben wird.

6. Vorrichtung nach Anspruch 5, **dadurch gekennzeichnet, dass** die oben genannte Schraube (10) im Inneren des Führungszylinders (3) zwischen dem Motor (2) und dem Rahmen (4) angeordnet ist.

7. Vorrichtung nach einem der Ansprüche 1 bis 6, **dadurch gekennzeichnet, dass** der Führungszylinder (3) Öffnungen (11) aufweist, die in dem Teil verteilt sind, der sich an der Seite des Motors (2) befindet, die derjenigen entgegengesetzt ist, an der sich die Mittel (10) zur Erzeugung des Gebläseluftstroms befinden, und zwar derart, dass dieser Luftstrom durch diese Öffnungen (11) ausgestoßen werden kann, nachdem er die Außenwand (2') des Motors (2) entlanggeströmt ist.

8. Vorrichtung nach einem der Ansprüche 1 bis 7, **dadurch gekennzeichnet, dass** sich der Rahmen (4), an dem der Motor (2) befestigt ist, außerhalb der Trommel (1) befindet und gegenüber vom Motor (2) eine Öffnung (5) aufweist, durch die Luft eingeführt werden kann, um den oben genannten Luftstrom zu bilden.

9. Vorrichtung nach einem der Ansprüche 1 bis 8, **dadurch gekennzeichnet, dass** der Führungszylinder (3) den Motor (2) trägt und mit seinem Ende, das zur Außenseite der Trommel (1) hin gerichtet ist, an dem oben genannten Rahmen (4) montiert ist.

10. Vorrichtung nach einem der Ansprüche 1 bis 9, **dadurch gekennzeichnet, dass** die Trommel (1) an mindestens einem Teil ihrer Länge einen Durchlass für den Luftstrom aufweist, der es ermöglicht, die Luft in den Bereich außerhalb der Trommel (1) auszustoßen, nachdem sie sich die Außenwand (2') des Motors (2) entlangbewegt hat.

11. Vorrichtung nach einem der Ansprüche 1 bis 10, **dadurch gekennzeichnet, dass** die Trommel (1) derart ausgestaltet ist, dass sie den Durchgang des Luftstroms ausgehend von dem Ende der Trommel (1), das zum Rahmen (4) hin gerichtet ist, an dem der Motor (2) befestigt ist, bis zu ihrem anderen Ende oder umgekehrt ermöglicht.

12. Vorrichtung nach einem der Ansprüche 1 bis 11, **dadurch gekennzeichnet, dass** der Motor (2) ein Element (9) antreibt, das im Inneren der Trommel (1) befestigt ist, so dass die Trommel (1) um ihre Achse gedreht werden kann.

13. Vorrichtung nach Anspruch 12, **dadurch gekennzeichnet, dass**, wenn die Trommel (1) eine rohrförmige Form aufweist, das oben genannte Element (9) derart ausgestaltet ist, dass es den Durchgang des Luftstroms ausgehend von dem Ende der Trommel (1), das zum Rahmen (4) hin gerichtet ist, an dem der Motor (2) befestigt ist, bis zu einem Bereich außerhalb der Trommel (1), insbesondere bis zu ihrem entgegengesetzten Ende, oder umgekehrt ermöglicht.

14. Vorrichtung nach Anspruch 12 oder 13, **dadurch gekennzeichnet, dass** das Element (9) mindestens teilweise elastisch verformbar ist, um eine begrenzte Querbewegung des Motors (2) in Bezug auf die Drehachse der Trommel (1) zu ermöglichen.

15. Einrichtung zum Verschließen eines Wandausschnitts oder einer anderen Öffnung, umfassend eine Tür, die bei der Öffnung der Tür um eine Trommel (1) gewickelt werden kann und beim Verschließen von dieser Trommel (1) abgewickelt werden kann, **dadurch gekennzeichnet, dass** sie die Vorrichtung nach einem der Ansprüche 1 bis 14 umfasst.
